**Europäisches Patentamt**

(19) **European Patent Office**

**Office européen des brevets**

(19)

(11) Numéro de publication: **0 023 902**
**B1**

(12) **FASCICULE DE BREVET EUROPEEN**

(45) Date de publication du fascicule du brevet:
**24.10.84**

(51) Int. Cl.³: **G 02 B 5/16**

(21) Numéro de dépôt: **80900234.8**

(22) Date de dépôt: **31.01.80**

(86) Numéro de dépôt international:
**PCT/CH 80/00013**

(87) Numéro de publication internationale:
**WO 80/01720** (21.08.80 Gazette 80/19)

(54) **DISPOSITIF OPTIQUE DE CONTROLE ET DE REGLAGE DE LA LUMIERE.**

(30) Priorité: **15.02.79 CH 1477/79**

(43) Date de publication de la demande:
**18.02.81 Bulletin 81/7**

(45) Mention de la délivrance du brevet:
**24.10.84 Bulletin 84/43**

(84) Etats contractants désignés:
**AT DE FR GB LU NL SE**

(56) Documents cités:
**DE - A - 2 810 753**
**US - A - 3 354 319**

**Book N.S. KAPANY, " FIBER OPTICS-PRINCIPLES and APPLICATIONS", 1967, Academic Press (New York), pages 256 à 258**

(73) Titulaire: **THIEBEAUX, Jean-Claude, Rue Liotard 77, CH-1203 Genève (CH)**

(72) Inventeur: **THIEBEAUX, Jean-Claude, Rue Liotard 77, CH-1203 Genève (CH)**

(74) Mandataire: **Vuille, Roman et al, c/o KIRKER & Cie S.A. 14, rue du Mont-Blanc Case Postale 872, CH-1211 Genève 1 (CH)**

ACTORUM AG

# Description

La présente invention concerne un dispositif de contrôle et de réglage de la lumière se composant de câbles de fibres optiques recevant la lumière d'une source lumineuse et de câbles de fibres optiques destinés à recevoir la lumière transmise, lesdits câbles étant disposés de telle manière que la lumière transmise soit établie ou interrompue dans sa totalité par un déplacement minime d'un écran opaque, ou qu'elle varie de façon progressive ou dégressive sous l'effet du déplacement dudit écran.

Un dispositif simple connu pouvant avoir de telles fonctions est une lentille convergente à faces cylindriques. En effet, une telle lentille concentre en un segment focal les rayons lumineux qui lui parviennent parallèlement à son axe optique, ce qui implique que la source lumineuse soit, au moins virtuellement, suffisamment éloignée.

En pratique, cependant, on utilise des systèmes optiques plus complexes, composés de plusieurs lentilles, nécessitant une installation précise, et d'un prix élevé.

On connaît, d'autre part, certains dispositifs optiques utilisant des fibres optiques comme organes transmetteurs de lumière. Le document de brevet DE-A-2 810 753 décrit un dispositif de focalisation d'image comportant un premier faisceau de fibres optiques disposées à une extrémité selon un alignement, et séparées les unes des autres à l'autre extrémité en étant disposées en un cercle; un second faisceau symétrique par rapport au premier nommé; et un écran rotatif, placé entre les deux cercles ainsi formés par les extrémités des fibres de chacun des faisceaux. Ledit écran, tournant à haute vitesse dans les conditions d'emploi du dispositif, comporte une fenêtre unique destinée à permettre, successivement au travers de chaque fibre, la transmission de l'image à focaliser. Dans un tel dispositif seule une fibre optique à la fois transmet la lumière; on ne peut en outre avoir d'atténuation ou de transmission contrôlée de la lumière. Une propagation de la totalité de la lumière transmise n'est pas non plus réalisable.

Un dissecteur d'image utilisant également des fibres optiques comme organe transmetteur de lumière est décrit dans N.S. Kapany, «Fiber optics – Principle and Applications», 1967, Academic Press (New York), p. 256–8. On y décrit plus particulièrement un faisceau aplati de fibres optiques, un écran opaque pouvant être associé au dispositif pour interrompre la lumière ainsi transmise. Ledit écran est en fait un élément d'un obturateur photographique. A la différence du dispositif selon la présente invention, il convient de noter qu'un tel dispositif ne comprend seulement qu'un faisceau aplati de fibres optiques.

Aucun des dispositifs connus ne permet pour l'instant de réaliser de façon simple et efficace un contrôle ou réglage de la lumière tel que le permet le dispositif selon l'invention. Aucun d'entre eux notamment ne permet de contrôler ou de régler de façon sélective, par l'intermédiaire du déplacement d'un écran opaque, la lumière issue d'une source unique aboutissant à une pluralité d'éléments sensibles tels que cellules photo-électriques par exemple.

Le but de l'invention est précisément de combler avantageusement cette lacune, ou tout au moins de remplacer les systèmes complexes existants par un dispositif plus simple et plus fiable.

A cet effet, la présente invention a pour objet un dispositif optique de contrôle et de réglage de la lumière, tel que défini à la revendication 1.

Dans le dispositif ainsi défini, lorsque le bord de l'écran est parallèle à au moins deux alignements de fibres se faisant face de part et d'autre dudit espace libre, un déplacement minime dudit écran peut ainsi établir ou interrompre la propagation de toute la lumière transmise entre ces deux alignements.

Le dispositif peut avoir en outre d'autres propriétés, lesquelles seront exposées plus loin. En particulier, lorsqu'au moins une partie d'un bord d'un écran n'est pas parallèle à au moins une partie d'un alignement, la quantité de lumière transmise par les fibres de cet alignement est alors variable avec le déplacement de cet écran.

La précision et la sensibilité du fonctionnement du dispositif dépendent, pour chaque alignement, de la largeur de l'alignement considéré, et la quantité de lumière transmise dépend en outre de sa longueur.

La description des différentes formes d'exécution de l'invention, ainsi que de leurs propriétés, sera plus simple et plus explicite en se référant aux dessins annexés, dans lesquels:

La fig. 1 montre schématiquement et en perspective, une forme d'exécution du dispositif selon l'invention.

Les figs 2 et 3 montrent, schématiquement et en perspective, deux formes particulières de faisceaux de fibres.

Les figs 4 à 9 montrent schématiquement six formes différentes du bord d'un écran et d'arrangement des fibres.

Les figs 10 et 11 montrent schématiquement chacune un assemblage de deux formes différentes du bord d'un écran et d'arrangement des fibres.

La fig. 12 montre, en vue de côté agrandie, un support permettant la réalisation d'un dispositif selon la fig. 1.

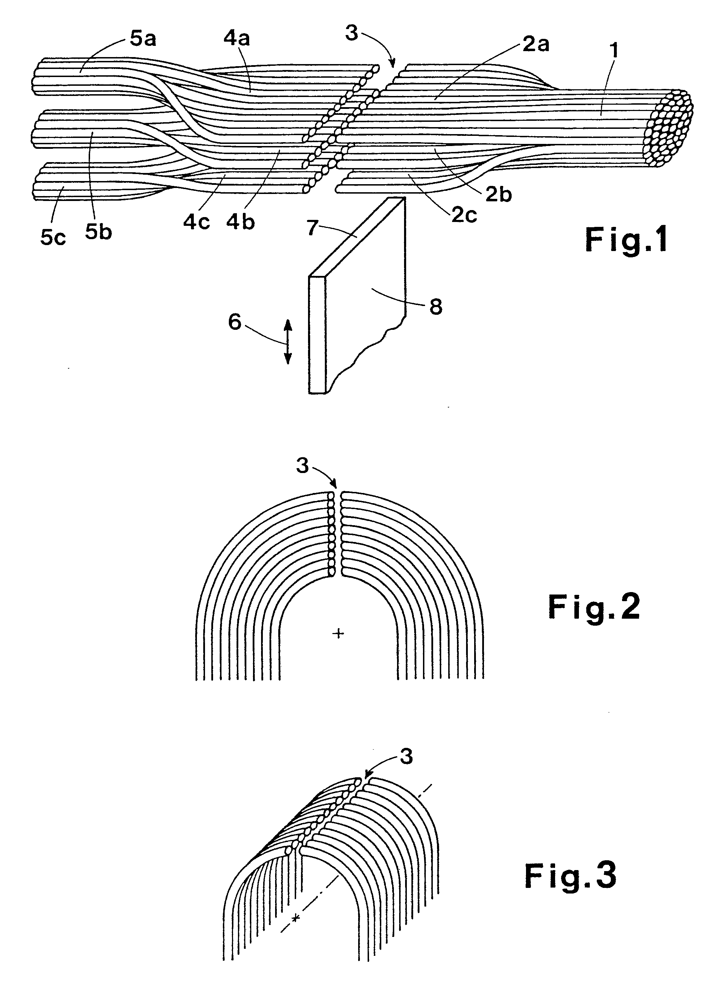

La forme d'exécution selon la figure 1 comprend trois câbles 5a, 5b et 5c, composés de fibres optiques. Chacun de ces câbles comporte un faisceau aplati 4a, 4b et 4c, respectivement, dont les alignements du début de leurs fibres sont parallèles entre eux et se trouvent dans un plan, de préférence perpendiculaire à l'axe des fibres, en un endroit 3 où les fibres reçoivent la lumière d'une source lumineuse (telle que lampe électrique ou lumière diffuse du jour), par l'intermédiaire des fibres optiques d'un câble 1 réparties en trois faisceaux aplatis 2a, 2b et 2c.

Les alignements du début des fibres de ces faisceaux 2a, 2b et 2c, et les alignements du début des fibres des faisceaux 4a, 4b et 4c, se font face, respectivement deux à deux, de part et d'autre d'un espace 3 libre et étroit, délimité par le début des fibres suivant deux plans parallèles entre eux. Un écran 8, sous forme d'une plaque opaque, ayant un bord 7 droit et parallèle aux alignements du début des fibres des faisceaux, peut se déplacer dans l'espace 3 selon la flèche 6 afin d'établir ou d'interrompre la propagation de la lumière entre les fibres de chacun des alignements des faisceaux 2a, 2b et 2c, et les fibres de chacun des alignements des faisceaux 4a, 4b et 4c, respectivement.

La lumière sortant des fibres des câbles 5a, 5b et 5c, peut être utilisée, par exemple, simplement comme moyen direct d'indication optique si cette lumière est visible ou pour exciter une (ou des) cellule(s) photo-électrique(s).

Les câbles 5a, 5b et 5c, ainsi que le câble 1 peuvent être d'une longueur relativement grande pour, par exemple, être mis à dimension au moment de l'utilisation du dispositif. D'autre part, la propagation de la lumière dans les fibres optiques est évidemment indépendante de la forme du câble qui peut même donc comporter successivement plusieurs formes différentes. Si ces câbles sont relativement longs, ils seront, de préférence, de forme cylindrique, cette forme ayant l'avantage du moindre encombrement possible, et, s'ils sont courts, leur forme pourra, par exemple, dépendre de la réalisation du dispositif suivant que le logement de ces câbles est obtenu par perçage, leur section sera alors circulaire, ou par fraisage, leur section pourra alors être, par exemple, carrée ou triangulaire, ou dépendre, en y correspondant d'une façon plus précise, de la forme de la partie sensible de cellules photo-électriques pour les câbles 5a, 5b et 5c, ou de la forme de la source lumineuse pour le câble 1.

La disposition des fibres des faisceaux dans la figure 1 permet une réalisation relativement aisée du dispositif, mais, pour chaque faisceau, le fonctionnement du dispositif est indépendant de la distance entre l'alignement du début des fibres et l'espace de transition de la forme plane à la forme cylindrique de la disposition des fibres, de sorte qu'à l'extrême la partie plane de chaque faisceau peut être réduite à l'alignement du début des fibres.

Selon la figure 2, les fibres constitutives de deux faisceaux se faisant face sont empilées l'une sur l'autre autour d'un cercle puis coupées à l'endroit 3 de part et d'autre d'un plan perpendiculaire audit cercle en son centre, tandis que, selon la figure 3, les fibres sont rangées côte à côte autour d'un cylindre puis coupées à l'endroit 3 de part et d'autre d'un plan contenant l'axe dudit cylindre; dans ces deux cas, les alignements du début des fibres des deux faisceaux se font face de part et d'autre de l'espace 3 qui correspond, de façon analogue au cas de la figure 1, au passage d'un écran. (Les dispositifs, tels que représentés seulement partiellement aux figures 2 et 3, comportent en fait comme dans le cas de la figure 1, plusieurs faisceaux dont les alignements du début des fibres sont superposés). Ces deux dispositions particulières des fibres des faisceaux permettent que les câbles d'entrée et de sortie de la lumière soient d'un même côté du dispositif, ce qui peut présenter l'avantage d'un encombrement plus pratique, en particulier, lorsque la place disponible autour d'un écran est restreinte; en outre, un dispositif selon la figure 2 convient particulièrement bien à l'utilisation d'un écran de forme cylindrique ou conique.

On notera que, pour chaque alignement d'un dispositif selon l'une des figures 1 à 3, il est plus simple et moins onéreux de ranger côte à côte des fibres dont le diamètre correspond à la précision et à la sensibilité à atteindre plutôt que de disposer plusieurs rangées de fibres d'un diamètre moindre. Toutefois, si la dispersion de la lumière dans l'espace 3 d'un dispositif selon l'une des figures 1 à 3 est excessive, par suite d'une trop grande épaisseur de l'écran par rapport à la largeur des alignements, chaque alignement du début des fibres recevant la lumière depuis cet espace 3 pourra être plus large que l'alignement, lui correspondant, du début des fibres conduisant la lumière audit espace; dans ce cas, chaque alignement le plus large sera, de préférence, constitué d'un nombre impair de rangées de fibres.

Pour réduire la dispersion de la lumière dans l'espace 3 d'un dispositif selon l'une des figures 1 à 3 on peut aussi associer à l'écran une (ou plusieurs) lame(s) à faces parallèles en une matière transparente et réfringente, par exemple en assemblant une plaque transparente et une plaque opaque ou en maintenant un film photographique partiellement impressionné entre deux plaques transparentes, ce qui permet alors l'utilisation d'un écran relativement épais et rigide.

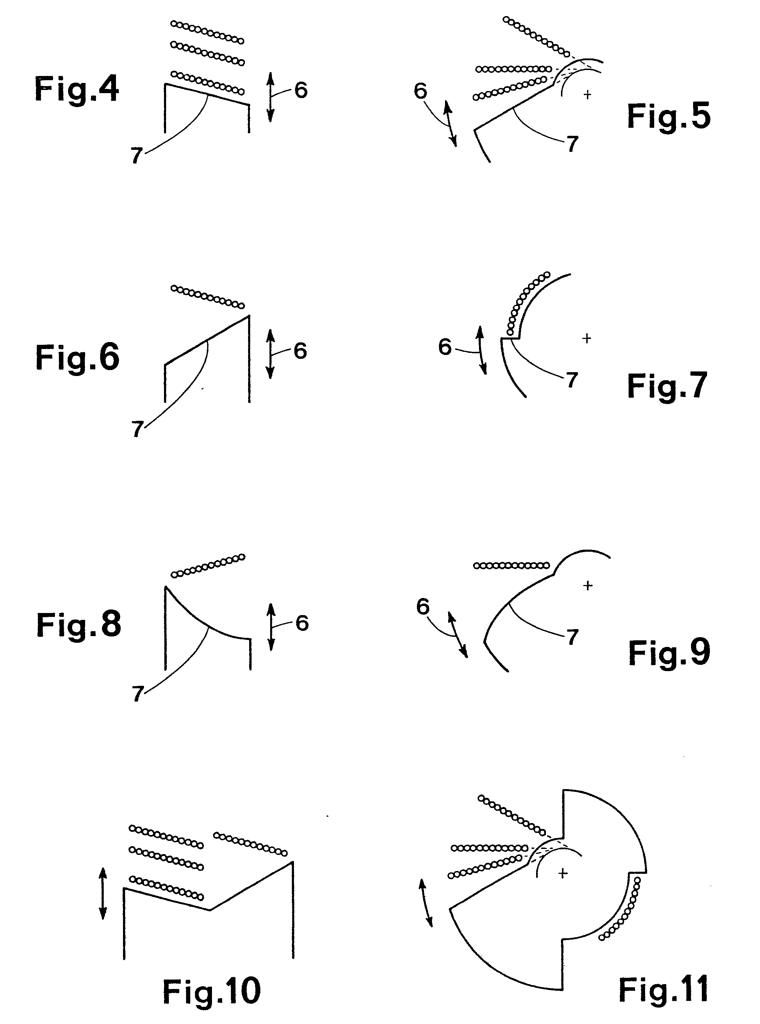

Pour que la propagation de la lumière puisse être totalement établie ou interrompue par un déplacement minimal d'un écran, successivement pour chaque faisceau, il suffit, pratiquement, que le bord de cet écran puisse coïncider avec chaque alignement du début des fibres de ces faisceaux; ces alignements et le bord de l'écran peuvent donc être des courbes. De préférence, le bord 7 de l'écran est droit et parallèle aux alignements du début des fibres des faisceaux et se déplace dans la direction 6 (qui ne doit pas forcément être perpendiculaire au bord de l'écran et aux alignements comme le montre la figure 4) lorsque le déplacement de l'écran est linéaire, ce qui est le cas des figures 1 et 4, ou bien, comme le montre la figure 5, le prolongement de chacun des alignements du début des fibres des faisceaux et celui du bord 7 droit de l'écran sont tangents à un même cercle (qui peut être un point), auquel lui est perpendiculaire en son centre l'axe de pivotement de l'écran, lorsque le déplacement de l'écran est circulaire.

Selon la figure 6 (illustration seulement partielle), le bord 7 droit de l'écran n'est pas parallèle à l'alignement du début des fibres d'un faisceau, de sorte que le déplacement de l'écran dans la direction 6 (qui peut être quelconque, mais non parallèle au bord de l'écran ni à cet alignement) produit une variation, progressive ou dégressive suivant le sens de déplacement de l'écran, de la quantité de lumière transmise par les fibres de ce faisceau.

Selon la figure 7 (illustration également seulement partielle), les fibres d'un faisceau sont rangées autour d'une surface cylindrique dont l'axe est le même que celui de pivotement d'un écran, de sorte que la rotation de cet écran produit une variation, progressive ou dégressive suivant le sens de déplacement de l'écran, de la quantité de lumière transmise par les fibres de ce faisceau.

Dans le cas des figures 6 et 7, ladite variation de la lumière n'est pratiquement proportionnelle au déplacement de l'écran que si la répartition de la lumière est suffisamment uniforme.

Le déplacement d'un prisme en une matière partiellement transparente, telle qu'un verre fumé, produit une variation de la quantité de lumière transmise par les fibres d'un faisceau proportionnelle au déplacement de cet écran même si la répartition de la lumière n'est pas uniforme. Afin de ne pas dévier la propagation de la lumière et d'en réduire la dispersion, on peut accoler audit prisme un second prisme, de même section et en une matière transparente de même indice de réfraction, pour réaliser ainsi une lame à faces parallèles.

Selon les figures 8 et 9 (illustrations également seulement partielles), le bord 7 de l'écran a la forme d'une courbe (qui peut être une droite) afin que, si toutefois la répartition de la lumière est suffisamment uniforme, la variation de la lumière transmise par les fibres d'un faisceau soit pratiquement une fonction mathématique du déplacement de cet écran, lequel déplacement est linéaire dans le cas de la figure 8 et circulaire dans le cas de la figure 9.

On notera qu'il est en général pratiquement plus simple de découper un écran suivant une courbe particulière et de ranger des fibres suivant un plan plutôt que suivant une surface particulière, et que c'est la disposition relative des fibres par rapport à la forme du bord d'un écran qui est déterminante. De même, c'est le déplacement relatif du bord d'un écran par rapport à l'alignement du début des fibres d'un faisceau qui est déterminant.

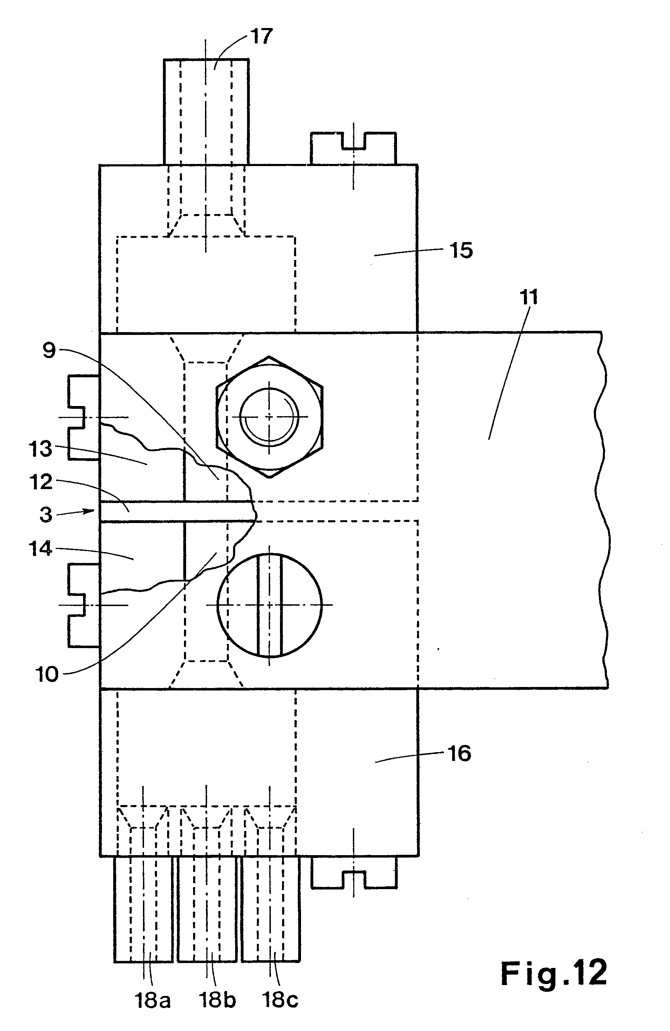

Un même dispositif peut être un assemblage de plusieurs des cas représentés par les figures 4, 6 et 8, ou 5, 7 et 9, comme le montrent, à titre d'exemples, les figures 10 et 11; la figure 10 correspond à un assemblage des alignements et du bord de l'écran des figures 4 et 6, et la figure 11 correspond à un assemblage des alignements et du bord de l'écran des figures 5 et 7.

Le bord d'un écran peut aussi comporter, par rapport à un même alignement, plusieurs formes différentes; par analogie, les fibres d'un même faisceau peuvent aussi être disposées de telle façon qu'un alignement soit, par exemple, une ligne brisée.

Un écran peut ne pas être entièrement opaque, mais comporter, par exemple par découpage, des parties opaques et d'autres laissant passer la lumière de formes et de dimensions quelconques; en particulier, une partie opaque ou une partie transparente peut être de forme et de dimensions telles que la propagation de la lumière ne puisse être, respectivement, interrompue ou établie que pour un faisceau à la fois.

On peut répartir les fibres d'un même alignement en plusieurs câbles pour, par exemple, transmettre la même information optique en plusieurs endroits ou augmenter la fiabilité du fonctionnement d'un appareil, plusieurs cellules photo-électriques ayant la même fonction pouvant ainsi recevoir chacune une partie de la lumière provenant d'un même alignement.

Par analogie, on peut alimenter en lumière un même dispositif par plusieurs sources lumineuses, soit ayant des rayonnements différents pour, par exemple, utiliser une lumière visible comme moyen direct d'indication optique et une lumière infra-rouge pour exciter des cellules photo-électriques, soit pour, par exemple, des raisons de puissance nécessaire, et, dans ce cas, on aura intérêt, pour des raisons de fiabilité, à diviser le nombre de fibres de chacun des alignements par le nombre de sources lumineuses de telle façon que chaque alignement soit alimenté par toutes les sources lumineuses, plutôt, par exemple, que chaque alignement ait sa propre source lumineuse.

Inversément à ce qui précède, plusieurs dispositifs peuvent avoir la même source lumineuse lorsque, par exemple, chacun de ces dispositifs a son propre écran, ces écrans étant déplacés par des moyens différents.

Une partie des fibres d'un câble d'un dispositif captant la lumière depuis une source lumineuse peut être prélevée pour, par exemple, illuminer un témoin, directement si la lumière est visible ou par l'intermédiaire d'une cellule photo-électrique.

La description qui suit concerne la réalisation d'un dispositif correspondant à la figure 1.

On réalise les différentes pièces, de préférence goupillées entre elles, du support que montre, en vue de côté agrandie, la figure 12. On assemble ensuite, en maintenant entre elles un espace 3 qui correspondra au passage d'un écran, les deux bases 9 et 10 avec les deux flasques 11 et 12, puis on exécute, par fraisage, dans les deux bases ainsi assemblées, une rainure correspondant à la partie plane des faisceaux de fibres.

On dispose, les unes à côté des autres, à l'intérieur de ladite rainure, et en les noyant dans une résine synthétique, les fibres optiques, préalablement coupées à une longueur largement supérieure à la longueur totale du support complet, afin de réaliser ainsi la partie plane des faisceaux 2a et 4a, puis 2b et 4b, et enfin 2c et 4c, l'espacement des faisceaux entre eux étant obtenu au moyen de cales. On maintient l'ensemble des fibres ainsi disposées au moyen des deux couvercles 13 et 14 fixés chacun à chacune des deux bases 9 et 10 respectivement.

On introduit ensuite, et en les noyant dans une résine synthétique, toutes les fibres des trois faisceaux 2a, 2b et 2c, à l'intérieur du tube 17 du capot 15 que l'on fixe à la base 9 pour le côté correspondant au câble 1, puis les fibres de chacun des faisceaux 4a, 4b et 4c, à l'intérieur de chacun des tubes 18a, 18b et 18c, respectivement, du capot 16 que l'on fixe à la base 10 pour le côté correspondant aux câbles 5a, 5b et 5c.

Après polymérisation de la résine synthétique, on coupe les fibres dans l'espace 3 et à la sortie des différents tubes, puis on polit toutes les extrémités des fibres.

Ce mode de réalisation permet que les fibres de chacun des faisceaux se correspondent avec précision de part et d'autre de l'espace 3, d'utiliser les flasques d'assemblage 11 et 12 comme moyen de fixation du dispositif et pour guider un écran, et d'adapter aux tubes entourant les câbles, par exemple, soit des connecteurs, soit directement des éléments d'opto-électronique, tels que diode à rayonnement infra-rouge pour le câble 1 et photo-transistors pour les câbles 5a, 5b et 5c.

Le déplacement d'un écran associé à un dispositif peut être commandé mécaniquement par un senseur mesurant une grandeur physique, tel que, par exemple, un manomètre à membrane mesurant la pression à l'intérieur d'une enceinte, ou une grandeur chimique, tel qu'un pH-mètre mesurant le coefficient d'acidité ou d'alcalinité d'une solution.

Lorsque la lumière transmise par une partie au moins des fibres d'un dispositif est visible, cette lumière peut être utilisée comme moyen direct d'indication optique; dans ce cas, l'extrémité des fibres d'un (ou plusieurs) câble(s) du dispositif, ou d'un (ou plusieurs) câble(s) connecté(s) au dispositif, peut, par exemple, simplement affleurer la surface d'un panneau indicateur ou illuminer un (ou des) voyant(s), ou encore ces fibres peuvent être disposées en forme de signe(s), de chiffre(s) ou de lettre(s). On peut donc ainsi renseigner, notamment à distance et éventuellement en différents endroits, sur une grandeur physique ou chimique, par exemple sur la pression dans une enceinte.

La lumière transmise par les fibres d'un dispositif peut aussi être utilisée pour exciter une (ou des) cellule(s) photo-électrique(s), et le signal électrique émis par cette (ou chaque) cellule peut être utilisé pour agir sur un moyen, par exemple, d'indication optique ou de réglage. On peut donc ainsi renseigner ou agir automatiquement sur une grandeur physique ou chimique, par exemple agir sur une vanne pour éviter une sur-pression dans une enceinte; la disposition de plusieurs faisceaux permet, en particulier, d'agir sur plusieurs moyens de réglage d'une grandeur physique ou chimique, par exemple d'agir soit sur une vanne, soit sur une pompe, afin de maintenir constante la pression dans une enceinte, et, éventuellement en outre, de renseigner sur cette grandeur physique ou chimique, soit directement si la lumière utilisée est visible, soit par l'intermédiaire d'une (ou plusieurs) cellule(s) photo-électrique(s). On peut aussi prévoir un système d'alarme pouvant être enclenché par la réponse d'une cellule photo-électrique et détecter ainsi, par exemple, une pression dangereuse.

La disposition d'un faisceau, ou d'un écran partiellement opaque, tel que la quantité de lumière transmise à une cellule photo-électrique est variable avec le déplacement d'un écran permet à cette cellule d'avoir une réponse également variable, et cette variation peut alors être utilisée, par exemple, pour agir sur la vitesse d'action d'un moyen de réglage; la disposition de plusieurs de tels faisceaux permet, par exemple, d'agir, distinctement, sur la vitesse d'action de plusieurs moyens de réglage. Une telle variation de la réponse d'une cellule peut aussi être mesurée au moyen, par exemple, d'un galvanomètre, et cette mesure électrique peut alors être transcrite en mesure de la grandeur physique ou chimique concernée.

La lumière transmise par les fibres d'un dispositif peut être transmise à un (ou plusieurs) autre(s) dispositif(s) de façon à, par exemple, pouvoir conditionner l'action d'un moyen de réglage d'une certaine grandeur physique ou chimique à une (ou plusieurs) autre(s) grandeur(s) physique(s) ou chimique(s). On peut aussi parvenir à la même fonction en associant à un même dispositif plusieurs écrans mus chacun par un senseur différent.

Un dispositif peut être utilisé afin de positionner avec précision un mobile se déplaçant, par exemple, sur un rail, un dispositif ou un écran étant relié mécaniquement à ce mobile. L'écran peut avoir, en particulier, la forme d'un long ruban ou, si son mouvement est circulaire, d'un disque comportant au moins une partie laissant passer la lumière. Le (ou chaque) dispositif comporte, de préférence, au moins un faisceau tel que la propagation de la lumière transmise à une cellule photo-électrique puisse être totalement établie ou interrompue par un déplacement relatif minimal de l'écran et un faisceau tel que la quantité de lumière transmise à une cellule photo-électrique, variable avec le déplacement relatif de l'écran, permette d'agir progressivement sur un moyen de freinage du mobile.

**Revendications**

1. Dispositif optique de contrôle et de réglage de la lumière comprenant au moins un premier câble de fibres optiques (1) recevant à l'une de ses extrémités la lumière provenant d'une source lumineuse, une pluralité de seconds câbles de fibres optiques (5a, 5b, 5c, ...) disposés par l'une de leurs extrémités en regard de l'autre extrémité dudit premier câble, pour recevoir et conduire la lumière transmise par le premier câble (1), et au moins un écran au moins partiellement opaque (8) déplaçable au travers de l'espace libre et étroit (3) aménagé entre les extrémités en regard desdits câbles et destiné à permettre l'établissement, l'interruption ou la variation de la lumière transmise, caractérisé par le fait qu'à l'autre extrémité du premier câble (1) adjacente audit espace libre (3), les fibres optiques constitutives de ce câble sont disposées selon une pluralité de premiers faisceaux aplatis (2a, 2b, 2c, ...), le début des fibres de chacun desdits premiers faisceaux formant un alignement, que dans le prolongement desdits premiers faisceaux se trouve un nombre correspondant desdits seconds câbles (5a, 5b, 5c, ...) dont les fibres optiques des extrémités recevant la lumière transmise sont disposées selon des faisceaux aplatis (4a, 4b, 4c, ...), le début des fibres de chacun desdits faisceaux aplatis desdits seconds câbles formant également un alignement faisant face à celui du faisceau aplati correspondant dudit premier câble, et que ledit écran (8) présente un bord (7) dont le profil ainsi que la disposition par rapport à ceux des alignements du début des fibres des faisceaux susmentionnés sont choisis tels que le mouvement imprimé audit bord par le déplacement de l'écran (8) au travers dudit espace libre (3) conduit à l'établissement ou à l'interruption de toute la lumière transmise par au moins un des premiers faisceaux, ou à une variation progressive ou dégressive de la lumière transmise.

2. Dispositif selon la revendication 1, caractérisé par le fait que les faisceaux aplatis (2a, 2b, 2c, ...), respectivement 4a, 4b, 4c, ...), sont parallèles entre eux.

3. Dispositif selon la revendication 1, caractérisé par le fait que les faisceaux aplatis (2a, 2b, 2c, ...), respectivement (4a, 4b, 4c, ...), ne sont pas parallèles entre eux.

4. Dispositif selon l'une des revendications 1 à 3, caractérisé par le fait que l'écran (8) est associé à au moins une lame à faces parallèles en une matière réfringente, ou est sous forme d'une telle lame, afin de réduire la dispersion de la lumière entre les fibres des alignements se faisant face.

5. Dispositif selon l'une des revendications 1 à 4, caractérisé par le fait que l'écran (8) est déplacé mécaniquement par un senseur pouvant mesurer une grandeur physique ou chimique.

6. Dispositif selon la revendication 5, caractérisé par le fait que ledit senseur est un manomètre à membrane.

7. Utilisation du dispositif selon l'une des revendications 1 à 6 caractérisée par le fait que la lumière transmise par au moins une partie des fibres d'un faisceau est utilisée comme moyen direct d'indication optique.

8. Utilisation du dispositif selon l'une des revendications 1 à 6 caractérisée par le fait que la lumière transmise par au moins une partie des fibres d'un faisceau est utilisée pour exciter une cellule photo-électrique.

9. Utilisation du dispositif selon l'une des revendications 1 à 8, caractérisée par le fait qu'il se déplace relativement à un écran afin de pouvoir positionner un mobile.

## Claims

1. Optical device for control and regulation of light, comprising at least a first cable of optical fibres (1) receiving at one of its ends the light deriving from a light source, a plurality of second cables of optical fibres (5a, 5b, 5c etc) arranged with one of their ends opposite the other end of the said first cable, in order to receive and conduct the light transmitted by the first cable (1), and at least one at least partly opaque screen (8) capable of moving through the free narrow space (3) arranged between the facing ends of the said cables and serving to establish, interrupt or vary the light transmitted, characterized by the fact that at the other end of the first cable (1) adjacent to the said free space (3), the optical fibres constituting this cable are arranged in a plurality of first flattened bundles (2a, 2b, 2c etc), the beginnings of the fibres of each of the said first bundles forming one row, that in the continuation of the said first bundles there is a corresponding number of the said second cables (5a, 5b, 5c etc) in which the optical fibres at the ends receiving the transmitted light are arranged in flattened bundles (4a, 4b, 4c etc), the beginnings of the fibres of each of the said flattened bundles of the said second cables also forming a row facing the corresponding flattened bundle of the said first cable, and that the said screen (8) has an edge (7) whose profile and arrangement in relation to those of the rows of fibre beginnings of the bundles mentioned above are so chosen that the motion imparted to the said edge by movement of the screen (8) through the said free space (3) serves to establish or interrupt all the light transmitted by at least one of the first bundles, or to progressively or degressively vary the light transmitted.

2. Device according to Claim 1, characterized by the fact that the flattened bundles (2a, 2b, 2c etc) and (4a, 4b, 4c etc) respectively are mutually parallel.

3. Device according to Claim 1, characterized by the fact that the flattened bundles (2a, 2b, 2c etc) and (4a, 4b, 4c etc) respectively are not mutually parallel.

4. Device according to any of Claims 1 to 3, characterized by the fact that the screen (8) is allied to at least one parallel-faced plate in a refractive material, or is in the form of such a plate, in order to reduce the dispersion of the light between the fibres of the rows facing each other.

5. Device according to any of Claims 1 to 4, characterized by the fact that the screen (8) is moved mechanically by a sensor capable of measuring a physical or chemical size.

6. Device according to Claim 5, characterized by the fact that the said sensor is a diaphragm manometer.

7. Use of the device according to any of Claims 1 to 6, characterized by the fact that the light transmitted by at least a portion of the fibres of a bundle is used as a direct means of optical display.

8. Use of the device according to any of Claims 1 to 6, characterized by the fact that the light transmitted by at least a portion of the fibres in a bundle is used to actuate a photoelectric cell.

9. Use of the device according to any of Claims 1 to 8, characterized by the fact that it moves in relation to a screen in order to be able to position a moving body.

## Patentansprüche

1. Optische Kontroll- und Regelvorrichtung des Lichts; umfasst mindestens ein erstes Lichtleitfaserkabel (1), an dessem einem Ende der Lichteinlass seitens einer Lichtquelle stattfindet, eine Mehrzahl zweiter Lichtleitfaserkabel (5a, 5b, 5c, ...), wobei jeweils eines der Ende gegenüber dem Ende des ersten Kabels so gerichtet ist, dass der Einfall und die Weiterleitung des vom ersten Kabel (1) ausgesandten Lichtes erfolgen kann, und mindestens ein wenigstens teilweise lichtundurchlässiger Bildschirm (8), der sich durch den engen freien Raum (3) zwischen den sich zugewandten Enden der erwähnten Kabel bewegen lassen muss, wobei dieser Bildschirm zur Einstellung, Unterbrechung oder Veränderung des weitergeleiteten Lichtes eingerichtet ist; gekennzeichnet durch die Tatsache, dass am anderen Ende des ersten Kabels (1) neben dem erwähnten freien Raum (3) die optischen Fasern, aus denen das Kabel besteht, in einer Mehrzahl von ersten abgeflachten Bündeln zusammengefasst sind (2a, 2b, 2c, ...), wobei die Anfänge der Fasern jedes der erwähnten abgeflachten Bündel eine Reihe bilden, so dass in der Weiterführung der Fasern jedem der erwähnten Bündel eine entsprechende Anzahl zweiter Kabel (5a, 5b, 5c, ...) gegenübersteht, in welchen die optischen Fasern an den Enden, die das ausgesandte Licht empfangen, in abgeflachten Bündeln (4a, 4b, 4c, ...) angeordnet sind; dabei bilden auch die Anfänge der Fasern jedes der erwähnten abgeflachten Bündel eine Reihe, die den entsprechenden abgeflachten Bündeln des erwähnten ersten Kabels gegenüberstehen; der erwähnte Bildschirm (8) weist ebenfalls eine Kante (7) auf, deren Profil und Anordnung im Verhältnis zu jenen der Anfänge der Faserreihen, wie oben erwähnt, so gewählt wird, dass die bei der Drehung des Bildschirms (8) durch den erwähnten freien Raum (3) der Kante verliehene Bewegung dem Durchlass oder der Unterbrechung allen Lichtes, das von wenigstens einem der ersten Bündel ausgesandt wird, oder der progressiven oder degressiven Variation des weitergeleiteten Lichtes, dient.

2. Vorrichtung gemäss Anforderung 1, gekennzeichnet dadurch, dass die abgeflachten Bündel (2a, 2b, 2c, ...) bzw. (4a, 4b, 4c, ...) zueinander parallel sind.

3. Vorrichtung gemäss Anforderung 1, gekennzeichnet dadurch, dass die abgeflachten Bündel (2a, 2b, 2c, ...) bzw (4a, 4b, 4c, ...) zueinander nicht parallel sind.

4. Vorrichtung gemäss einer der Anforderungen 1 bis 3, gekennzeichnet dadurch, dass zum Bildschirm (8) mindestens eine gleichseitige Platte aus reflectivem Material gehört, bzw. dass dieser Bildschirm die Form einer solchen Platte hat, um damit die Lichtstreuung zwischen den Fasern der sich gegenüberstehenden Reihen möglichst gering gehalten wird.

5. Vorrichtung gemäss einer der Anforderungen 1 bis 4, gekennzeichnet dadurch, dass der Bildschirm (8) mechanisch durch einen Sensor zur Messung der physischen oder chemischen Grösse bewegt wird.

6. Vorrichtung gemäss Anforderung 5, gekennzeichnet dadurch, dass der erwähnte Sensor ein Plattenfeder-Manometer ist.

7. Verwendung der Vorrichtung gemäss einer der Anforderungen 1 bis 6, gekennzeichnet durch die Tatsache, dass das von mindestens einem Teil der Fasern eines Bündels weitergeleitete Licht direkt zur optischen Anzeige benutzt wird.

8. Verwendung der Vorrichtung gemäss einer der Anforderungen 1 bis 6, gekennzeichnet durch die Tatsache, dass das von mindestens einem Teil der Fasern eines Bündels weitergeleitete Licht zur Erregung einer photoelektronischen Zelle benutzt wird.

9. Verwendung der Vorrichtung gemäss einer der Anforderungen 1 bis 6, gekennzeichnet durch die Tatsache, dass sie sich im Verhältnis zum Bildschirm so bewegen lässt, dass ein beweglicher Körper positioniert werden kann.

Fig.1

Fig.2

Fig.3

Fig.4

Fig.5

Fig.6

Fig.7

Fig.8

Fig.9

Fig.10

Fig.11

0 023 902

**Fig.12**

13